# EUROPÄISCHE PATENTSCHRIFT

(11) **EP 3 759 327 B1**
(45) Veröffentlichungstag und Bekanntmachung des Hinweises auf die Patenterteilung: **06.04.2022**
(21) Anmeldenummer: 19708452.8
(22) Anmeldetag: 26.02.2019
(51) Int. Cl.: F01N 13/00, F01N 3/28, F01N 1/08

(54) **VORRICHTUNG ZUR ABGASNACHBEHANDLUNG**
DEVICE FOR EXHAUST GAS AFTERTREATMENT
DISPOSITIF POUR LE TRAITMENT DES GAZ D'ÉCHAPPEMENT

(30) Priorität: 01.03.2018 DE 102018203066
(43) Veröffentlichungstag der Anmeldung: 06.01.2021
(73) Patentinhaber: Vitesco Technologies GmbH, 93055 Regensburg (DE)
(72) Erfinder: HIRTH, Peter, 65824 Schwalbach a. Ts. (DE); KONIECZNY, Katrin, 65824 Schwalbach a. Ts. (DE); NAGEL, Thomas, 65824 Schwalbach a. Ts. (DE); STOCK, Holger, 65824 Schwalbach a. Ts. (DE)
(74) Vertreter: Vitesco Technologies
(86) Internationale Anmeldenummer: PCT/EP2019/054759
(87) Internationale Veröffentlichungsnummer: WO 2019/166444

(56) Entgegenhaltungen:
- EP-A1- 0 484 925
- EP-A1- 0 556 846
- EP-A1- 1 467 070
- EP-A1- 1 733 790
- JP-A- 2001 115 831
- US-A- 4 048 092

## Beschreibung

### Technisches Gebiet

Die Erfindung betrifft eine Vorrichtung zur Nachbehandlung von Abgasen eines Verbrennungsmotors mit zumindest einem vom Abgas durchströmbaren Katalysator und mit zumindest einem durch ein geschlossenes Volumen gebildeten vom Abgas entlang einer Einströmstrecke hin zu einer Ausströmstrecke durchströmbaren Schalldämpfer, wobei der Katalysator durch einen Wabenkörper gebildet ist, der eine Mehrzahl von mit Abgas durchströmbaren Strömungskanälen aufweist, wobei der Wabenkörper in ein den Wabenkörper umschließendes Mantelrohr aufgenommen ist und mit diesem stoffschlüssig verbunden ist, wobei der Katalysator im Inneren des Schalldämpfers angeordnet ist.

### Stand der Technik

Die Katalysatoren zur Abgasnachbehandlung einer Verbrennungskraftmaschine werden in den Abgasstrang integriert, um das von dem Verbrennungsmotor erzeugte Abgas nachzubehandeln und so den Emissionsausstoß in die Umwelt zu reduzieren. Die Katalysatoren sind hierzu gewöhnlich über Rohrleitungen mit dem Auslass des Verbrennungsmotors und mit dem Einlass in die unterschiedlichen Schalldämpfer innerhalb des Abgasstrangs verbunden.

Die EP 0 484 925 A offenbart einen Schalldämpfer mit Katalysator, wobei innerhalb des Gehäuses des Schalldämpfers ein Katalysator geschaffen ist. Wobei der Schalldämpfer ein äußeres Gehäuse aufweist, in dem ein geschlossener Raum ausgebildet ist, ein Einlassrohr und ein Auslassrohr, die in dem äußeren Gehäuse zum Einleiten und Abgeben eines Abgases in das äußere Gehäuse bzw. aus dem äußeren Gehäuse geschaffen sind, mindestens eine Trennwand, die den geschlossenen Raum des äußeren Gehäuses in zwei oder mehr Räume teilt, mindestens ein durch jede der Trennwände geschaffenes Durchtrittsrohr, um die geteilten Räume miteinander zu verbinden, und einen innerhalb von mindestens einem der Durchtrittsrohre geschaffenen Katalysator aufweist

Die EP 0 556 846 A offenbart einen Abgasschalldämpfer für Dieselmotoren insbesondere von Nutzfahrzeugen. In den Funktionsaufbau des Schalldämpfers ist ein Abgaskatalysator als Funktionsteil für die Schalldämpfung integriert.

Die EP 1 467 070 A offenbart eine kombinierte Abgasnachbehandlungs-/Schalldämpfungsvorrichtung im Abgasstrang einer Brennkraftmaschine, insbesondere für einen Dieselmotor eines Nutzfahrzeugs wie einen Lastkraftwagen oder einen Omnibus, mit einem Schalldämpfer, der räumlich durch eine vordere und hintere Stirnwand sowie eine Umfangsaußenwand begrenzt ist und in dessen Innenraum wenigstens ein den NO2-Anteil im durchströmenden Abgas signifikant erhöhender Voroxidationskatalysator und wenigstens eine Abgasnachbehandlungseinrichtung eingebaut sind, wobei nachzubehandelndes Abgas über ein Eintrittsrohr in den Schalldämpfer einleitbar ist und nach Durchströmung des Voroxidationskatalysators sowie der Abgasnachbehandlungseinrichtung gereinigt und mittelbar schallgedämpft wieder aus dem Schalldämpfer ausleitbar ist.

Die US 4 048 092 A offenbart ein verpacktes katalytisches Gemisch und ein Verfahren zu dessen Verwendung, insbesondere auf ein unter Druck stehendes, aerosolverpacktes katalytisches Gemisch, das zur Wiederbelebung verbrauchter katalytischer Trägerpads und anderer katalytischer Materialträger verwendet wird.

Die JP 2001 115 831 A offenbart einen Abgasschalldämpfer eines Verbrennungsmotors in Fahrzeugen wie beispielswiese einem Motorrad.

Die EP 1 733 790 A offenbart eine strukturierte Metallfolie, die insbesondere als Katalysator-Trägerkörper verwendbar ist, mit einer primären und mindestens einer weiteren, sekundären Struktur, wobei die primäre Struktur als Wellenstruktur ausgebildet ist, wobei mindestens die sekundäre Struktur die primäre Struktur zumindest teilweise überlagert, wobei mindestens die sekundäre Struktur überwiegend parallel zur primären Struktur angeordnet ist, wobei wenigstens die sekundäre Struktur eine von der primären Struktur unterschiedliche Frequenz und/oder Amplitude aufweist, und wobei mindestens die sekundäre Struktur intermittierend ausgebildet ist

Nachteilig an diesem Aufbau des Abgasstrangs ist, dass die Katalysatoren regelmäßig einen deutlich größeren Durchmesser aufweisen als die zur Verbindung genutzten Rohrleitungen. Demzufolge kommt es beim Durchströmen der Abgasanlage vom Verbrennungsmotor hin zum Auspuff zu mehreren abrupten Veränderungen des Strömungsquerschnitts. Diese Veränderungen des Strömungsquerschnitts, insbesondere die Übergänge von Abschnitten größeren Strömungsquerschnitts auf Abschnitte kleineren Strömungsquerschnitts führen zu starken Druckverlusten was nachteilig für einen möglichst effizienten Betrieb des Verbrennungsmotors ist.

### Darstellung der Erfindung, Aufgabe, Lösung, Vorteile

Daher ist es die Aufgabe der vorliegenden Erfindung eine Vorrichtung zur Abgasbehandlung zu schaffen, die einerseits eine den gesetzlichen Bestimmungen entsprechende Abgasreinigung ermöglicht und andererseits ausreichend Schalldämpfer aufzuweisen, um die gesetzlichen Lärmemissionsbestimmungen einzuhalten, wobei gleichzeitig der entstehende Druckverlust im Abgasstrang minimiert werden soll.

Die Aufgabe hinsichtlich der Vorrichtung wird durch eine Vorrichtung mit den Merkmalen von Anspruch 1 gelöst.

Ein Ausführungsbeispiel der Erfindung betrifft eine Vorrichtung zur Nachbehandlung von Abgasen eines Verbrennungsmotors mit zumindest einem vom Abgas durchströmbaren Katalysator und mit zumindest einem durch ein geschlossenes Volumen gebildeten vom Abgas entlang einer Einströmstrecke hin zu einer Ausströmstrecke durchströmbaren Schalldämpfer, wobei der Katalysator durch einen Wabenkörper gebildet ist, der eine Mehrzahl von mit Abgas durchströmbaren Strömungskanälen aufweist, wobei der Wabenkörper in ein den Wabenkörper umschließendes Mantelrohr aufgenommen ist und mit diesem stoffschlüssig verbunden ist, wobei der Katalysator im Inneren des Schalldämpfers angeordnet ist, wobei das den Wabenkörper aufnehmende Mantelrohr Öffnungen aufweist, welche ein Überströmen aus dem Wabenkörper hin zum vom Schalldämpfer eingeschlossenen Volumen ermöglichen.

Das geschlossene Volumen eines Schalldämpfers wird beispielsweise von einem metallischen Gehäuse gebildet. Das Ein- und Ausströmen von Abgas in dieses Gehäuse ist nur auf definierten Wegen, nämlich der Einströmstrecke und der Ausströmstrecke, möglich. Im Inneren des Schalldämpfers kann über die Reflexion des Schalls durch mehrere Kammern eine Mittelung der Schalldruckamplituden erreicht werden, wodurch eine Reduzierung der Schalldruckspitzen erreicht werden kann. Zusätzlich können Prallwände oder gezielte Querschnittsveränderungen im Volumen des Schalldämpfers vorgesehen sein, um die Schalldruckspitzen weiter zu senken. Zusätzlich oder alternativ dazu kann das Prinzip der Absorption angewendet werden, wobei ein poröses Material, beispielsweise Glaswolle oder Steinwolle, im Inneren des Schalldämpfers angeordnet ist und dieses die Schallenergie aufnimmt und in Wärme umwandelt.

Die allgemeinen Funktionsprinzipien von Schalldämpfern sind weithin im Stand der Technik bekannt und können in der bekannten Form in dem erfindungsgemäßen Schalldämpfer zum Einsatz kommen.

Die Einströmstrecke und die Ausströmstrecke sind vorteilhafterweise durch Rohrleitungen gebildet, über welche die Vorrichtung mit der Abgasleitung, die vom Verbrennungsmotor kommt, verbunden ist. Die Ausströmstrecke kann beispielsweise direkt in die Umgebung münden und somit den Auspuffbereich bilden. Alternativ kann die Ausströmstrecke des betrachteten Schalldämpfers auch in einen weiteren Schalldämpfer führen, beispielsweise wenn mehrere Schalldämpfer hintereinander in der Abgasstrecke angeordnet sind. Vorteilhafterweise weisen die Einströmstrecke und die Ausströmstrecke jeweils die gleichen Leitungsquerschnitte wie die vorhergehenden oder nachfolgenden Leitungsstücke der Abgasleitung auf. Dadurch werden ungewollte Druckverluste infolge von abrupten Querschnittsänderungen vermieden.

Bevorzugt ist der Wabenkörper aus metallischen Folien gebildet, die beispielsweise abwechselnd strukturiert und glatt ausgeführt sind und zu einem Lagenstapel aufeinandergestapelt wurden, bevor sie zur Erzeugung des Wabenkörpers aufgewickelt wurden. Auf diese Weise kann eine Vielzahl von Strömungskanälen erzeugt werden, die entlang einer axialen Richtung durchströmbar sind. Zur Fixierung und Stabilisierung ist der so erzeugte Wabenkörper in ein Mantelrohr eingesetzt und mit diesem stoffschlüssig verbunden, insbesondere verschweißt.

Besonders vorteilhaft an der erfindungsgemäßen Ausgestaltung ist, dass der Katalysator, bestehend aus dem Wabenkörper und dem Mantelrohr, innerhalb des Schalldämpfers angeordnet ist und der durchströmbare Querschnitt des Mantelrohrs im Wesentlichen gleich dem durchströmbaren Querschnitt der Einströmstrecke und/oder der Ausströmstrecke ist. Dadurch gibt es praktisch keine Veränderung des durchströmten Querschnitts, wodurch auch kein zusätzlicher Druckverlust bei der Durchströmung erzeugt wird.

Erfindungsgemäss ermöglichen Öffnungen im Mantelrohr ein Überströmen des Abgases aus dem Katalysator hinein in das Volumen des Schalldämpfers. In selber Weise ermöglichen die Öffnungen auch ein Überströmen von Abgas aus dem Schalldämpfer in den Katalysator hinein. Auf diese Weise wird auch ein Teil des bereits im Katalysator behandelten Abgases in das Volumen des Schalldämpfers geleitet, wodurch eine weitere Geräuschreduzierung erreicht werden kann. Sofern der Katalysator nahe an der Ausströmstrecke angeordnet ist, kann auch bereits durch den Schalldämpfer geströmtes Abgas wieder dem Katalysator zugeführt werden und schließlich durch die Ausströmstrecke aus dem Schalldämpfer ausgeblasen werden.

Besonders vorteilhaft ist es, wenn der Katalysator mit der Einströmstrecke und/oder der Ausströmstrecke fluidisch verbunden ist. Dies ist zu bevorzugen, da der Katalysator, speziell das Mantelrohr mit dem darin angeordneten Wabenkörper direkt an die Einströmstrecke und/oder die Ausströmstrecke angeschlossen sein kann, wodurch eine direkte Durchströmung des Katalysators sichergestellt ist.

Auch ist es vorteilhaft, wenn der Querschnitt des Mantelrohrs gleich groß ist, wie der durchströmbare Querschnitt der Einströmstrecke und/oder der Ausströmstrecke. Dies reduziert die auftretenden Druckverluste infolge von abrupten Querschnittsänderungen. Der real durchströmbare Querschnitt des Wabenkörpers ist zwar etwas geringer als der des Mantelrohres, jedoch ist die Reduzierung des Strömungsquerschnitts durch die Struktur des Wabenkörpers eher gering im Vergleich zu den sonst üblichen Veränderungen der Querschnittsflächen zwischen Zu- und Ableitungen und den Katalysatoren.

Ein bevorzugtes Ausführungsbeispiel ist dadurch gekennzeichnet, dass die Einströmstrecke und/oder die Ausströmstrecke durch eine Rohrleitung gebildet ist. Bevorzugt sind die Einströmstrecke und/oder die Ausströmstrecke direkt mit der restlichen Abgasleitung verbunden.

Auch ist es zu bevorzugen, wenn die Einströmstrecke und/oder die Ausströmstrecke entlang ihrer innerhalb des Schalldämpfers angeordneten Erstreckung Öffnungen hin zum vom Schalldämpfer eingeschlossenen Volumen aufweist. Diese Öffnungen sind vorteilhaft, um ein Überströmen des Abgases aus der Einströmstrecke in den Schalldämpfer hinein zu ermöglichen beziehungsweise ein Überströmen aus dem Schalldämpfer in die Ausströmstrecke. Dadurch kann ein Teil des Abgasstromes die Absorptionsmittel im Schalldämpfer durchströmen oder über entsprechende Reflexionsmittel im Schalldämpfer reflektiert und umgelenkt werden, bevor das Abgas schließlich aus dem Schalldämpfer ausströmt. Die Öffnungen können beispielsweise in Umfangsrichtung verteilte Bohrungen sein, die sich über eine definierte axiale Strecke erstrecken.

Darüber hinaus ist es vorteilhaft, wenn die die im Wabenkörper ausgebildeten Strömungskanäle bildenden Wandungen Öffnungen aufweisen, die ein Überströmen zwischen den Strömungskanälen des Wabenkörpers in radialer Richtung des Wabenkörpers ermöglichen. Dies ermöglicht einen Gasaustausch zwischen den einzelnen Strömungskanälen des Wabenkörpers. Dies verbessert die Durchströmung des Wabenkörpers indem eine bessere Gleichverteilung des Abgasstroms über den gesamten Strömungsquerschnitt des Wabenkörpers hinweg erzeugt wird. Foliendesigns zum Aufbau eines Wabenkörpers, der ein solches Überströmen ermöglicht sind weithin bekannt und können zur Erzeugung eines erfindungsgemäßen Wabenkörpers verwendet werden.

Auch ist es zweckmäßig, wenn der Mantel des Katalysators ein Zwischenrohr bildet, über welches die Einströmstrecke mit der Ausströmstrecke fluidisch verbunden ist. In diesem Fall wird der Katalysator vollständig über die ihm vorgelagerte Einströmstrecke mit Abgas beaufschlagt und das durch den Katalysator geströmte Abgas vollständig über die Ausströmstrecke abgeführt.

Die Einströmstrecke und die Ausströmstrecke weisen in diesem Fall idealerweise Öffnungen auf, über die ein Fluidkommunikation mit dem Innenvolumen des Schalldämpfers möglich ist.

Darüber hinaus ist es vorteilhaft, wenn der Schalldämpfer in zwei voneinander getrennte Teilvolumen unterteilt ist, wobei die Einströmstrecke von außen durch das erste Teilvolumen führt und in das zweite Teilvolumen mündet, wobei die Ausströmstrecke aus dem ersten Teilvolumen durch das zweite Teilvolumen führt und außerhalb des Schalldämpfers mündet, wobei in der Einströmstrecke und in der Ausströmstrecke jeweils ein Katalysator innerhalb des ersten Teilvolumens angeordnet ist.

Eine Mehrzahl von Teilvolumen ist vorteilhaft, um eine bessere Geräuschreduzierung zu erreichen. Durch das Umlenken des Abgases innerhalb des Schalldämpfers und das Durchströmen mehrere Kammern, wird der Schallpegel insgesamt reduziert.

Der vorgenannte Aufbau der Vorrichtung ist vorteilhaft, um einerseits eine ausreichende Nachbehandlung des Abgases sicherzustellen und gleichzeitig eine möglichst starke Geräuschreduzierung zu erreichen, ohne dabei einen unnötig hohen Druckverlust zu erzeugen.

Weiterhin ist es zweckmäßig, wenn die Einströmstrecke Öffnungen aufweist, über welche die Einströmstrecke mit dem ersten Teilvolumen in Fluidkommunikation steht. Durch solche Öffnungen kann ein Überströmen des Abgases aus der Einströmstrecke in das Volumen des Schalldämpfers ermöglicht werden, auch ohne dass das Abgas zuerst durch den Katalysator strömen muss.

Auch ist es vorteilhaft, wenn die Ausströmstrecke Öffnungen aufweist, über welche die Ausströmstrecke mit dem zweiten Teilvolumen in Fluidkommunikation steht. Durch die Öffnungen in der Ausströmstrecke kann das im Volumen des Schalldämpfers befindliche Abgas in die Ausströmstrecke überströmen und aus dem Schalldämpfer hinaus. Durch eine geschickte Anordnung der Katalysatoren und eine entsprechende fluidische Verbindung mit den Teilvolumen des Schalldämpfers kann erreicht werden, dass das Abgas mit einem möglichst minimalen Druckverlust durch den Schalldämpfer strömt, wobei eine Aufteilung in mehrere Strömungspfade erreicht wird. Die einzelnen Strömungspfade strömen nacheinander in unterschiedlicher Reihenfolge durch die Einströmstrecke, die Katalysatoren, die Teilvolumen des Schalldämpfers und die Ausströmstrecke.

Darüber hinaus ist es zu bevorzugen, wenn der Schalldämpfer in mehrere Teilvolumen untergliedert ist, wobei die einzelnen Teilvolumen über eine aus einer Einströmstrecke und/oder einer Ausströmstrecke und/oder einem Zwischenrohr gebildete Rohrleitung miteinander in Fluidkommunikation stehen.

Mehrere Teilvolumen sind vorteilhaft, um eine möglichst starke Geräuschreduktion zu erreichen. In einer vorteilhaften Ausgestaltung bildet das Mantelrohr des Katalysators ein Zwischenrohr. Durch die Öffnungen im Mantelrohr kann Abgas durch den Katalysator in eines der Teilvolumen strömen und auch aus diesem Teilvolumen wieder durch die Öffnungen des Mantelrohres in den Katalysator zurück. Davor und danach kann das Abgas aus der Einströmstrecke beziehungsweise der Ausströmstrecke durch die Öffnungen in jeweils eigene Teilvolumen strömen und ebenso wieder zurück.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine schematische Ansicht eines Schalldämpfers mit zwei Teilvolumen und zwei Katalysatoren,
- Fig. 2: eine schematische Ansicht eines Schalldämpfers mit drei Teilvolumen und einem im mittleren Teilvolumen angeordneten Katalysator, und
- Fig. 3: eine Detailansicht des Mantelrohrs und einer Folienlage des Katalysators, wobei insbesondere die radialen Öffnungen dargestellt sind über welche die Permeabilität der Matrix des Wabenkörpers und des Mantels erzeugt wird.

### Bevorzugte Ausführung der Erfindung

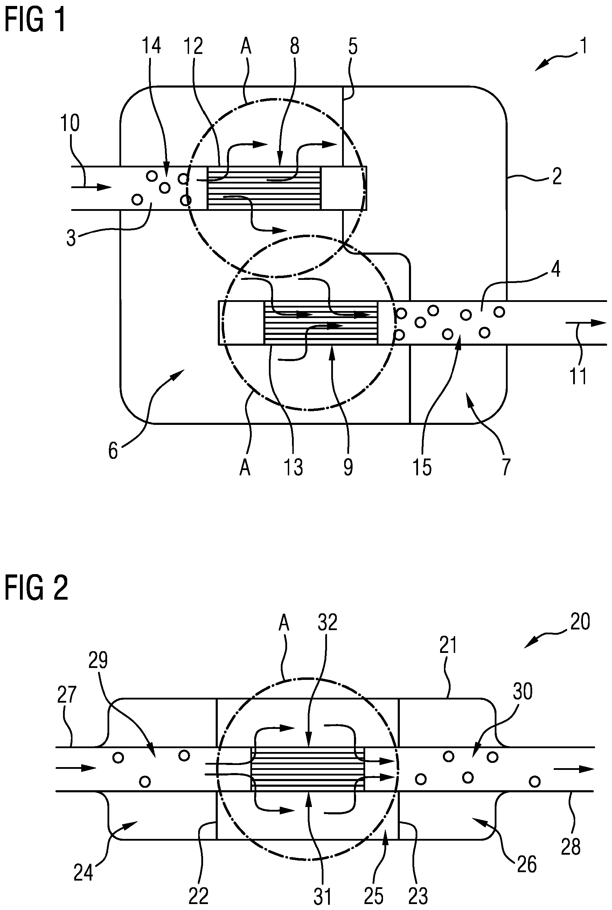

Die Figur 1 zeigt einen Schalldämpfer 1 der durch ein Gehäuse 2 gebildet ist. In das Gehäuse 2 kann entlang einer Einströmstrecke 3 ein Abgasstrom einströmen und durch eine Ausströmstrecke 4 aus dem Gehäuse 2 ausströmen. Die Einströmstrecke 3 und die Ausströmstrecke 4 sind durch Rohrleitungen gebildet, die vorzugsweise mit dem restlichen Abgasstrang verbunden sind.

Das Volumen des Schalldämpfers 1 ist im Inneren durch eine Trennwand 5 in zwei Teilvolumen 6 und 7 unterteilt. Im ersten Teilvolumen 6 sind zwei Katalysatoren 8 und 9 angeordnet. Die Katalysatoren sind als metallische Wabenkörper ausgebildet und weisen eine Mehrzahl von Strömungskanälen auf, die im Wesentlichen axial entlang der Einströmrichtung 10 beziehungsweise der Ausströmrichtung 11 durchströmt werden können. Die metallischen Wabenkörper sind in einem Mantelrohr 12 beziehungsweise 13 angeordnet und mit diesen stoffschlüssig verbunden. Der erste Katalysator 8 ist direkt mit der Einströmstrecke 3 verbunden und der zweite Katalysator 9 mit der Ausströmstrecke 4. Die durchströmbare Querschnittsfläche der Ein- und Ausströmstrecke 3, 4 und der Mantelrohre 12, 13 ist identisch, so dass insbesondere keine abrupten Veränderungen des Strömungsquerschnitts vorgesehen sind.

Die Einströmstrecke 3 und die Ausströmstrecke 4 weisen jeweils im Inneren des Gehäuses 2 eine Mehrzahl von Öffnungen 14, 15 auf, über welche ein Überströmen des Abgases zwischen dem Inneren der Strömungsstecken 3, 4 und den Teilvolumen 6, 7 ermöglicht wird.

Die Strömungskanäle innerhalb der Wabenkörper der Katalysatoren 8, 9 weisen Öffnungen auf, die ein radiales Überströmen zwischen den einzelnen Strömungskanälen erlauben. Weiterhin weisen die Mantelrohre 12, 13 ebenfalls Öffnungen auf, die ein Überströmen zwischen den Strömungskanälen des Wabenkörpers und dem Inneren des Schalldämpfers, insbesondere des ersten Teilvolumens 6, ermöglichen.

Der erste Katalysator 8 ist durch die Trennwand 5 geführt und mündet somit in das zweite Teilvolumen 7. Der zweite Katalysator 9 ist durch die Trennwand 5 geführt und mündet in die Ausströmstrecke 4, welche durch das zweite Teilvolumen 7 geführt ist und schließlich außerhalb des Schalldämpfers 1 mündet.

Somit ergeben sich verschiedene Strömungspfade, entlang derer der Schalldämpfer 1 vom Abgas durchströmbar ist. Ein möglicher Strömungspfad für das Abgas verläuft entlang der Einströmstrecke 3 durch den Katalysator 8 hinein in das zweite Volumen 7. Von dort durch die Öffnungen 15 in die Ausströmstrecke 4 und aus dem Gehäuse 2 des Schalldämpfers 1 hinaus.

Ein weiterer Strömungspfad verläuft über die Einströmstrecke 3 in den ersten Katalysator 8 und dort in radialer Richtung durch die Öffnungen in den Strömungskanälen und dem Mantelrohr 12 in das erste Teilvolumen 6. Aus dem ersten Teilvolumen 6 kann das Abgas in axiale Richtung in den zweiten Katalysator 9 einströmen. Alternativ dazu kann das Abgas aus dem ersten Teilvolumen 6 in radialer Richtung des zweiten Katalysators 9 durch die Öffnungen des Mantelrohrs 13 und die Öffnungen in den Strömungskanälen in den zweiten Katalysator 9 einströmen. Von dort strömt das Abgas in beiden Fällen entlang der Ausströmstrecke 4 aus dem Gehäuse 2 des Schalldämpfers 1.

Weiterhin ist es möglich, dass das Abgas direkt durch die Öffnungen 14 der Einströmstrecke 3 in das erste Teilvolumen 6 einströmt und von dort den zuvor beschriebenen Weg in axialer oder radialer Richtung hinein in den zweiten Katalysator 9.

Vorteilhafterweise kann so das Abgas über unterschiedliche Wege durch den Schalldämpfer 1 strömen wodurch eine optimale Reduzierung des Schallpegels erreicht werden kann. Im Schalldämpfer 1 können Absorptionsmittel, wie beispielsweise Glaswolle, vorgesehen sein oder alternativ oder zusätzlich dazu Reflexionselemente, die dafür sorgen, dass eine mehrfache Reflexion der Schallwellen innerhalb des Schalldämpfers 1 stattfindet, um den Schallpegel weiter zu reduzieren.

Durch den Aufbau in Figur 1 ist sichergestellt, dass das Abgas zumindest einen der beiden Katalysatoren 8, 9 durchströmt, bevor das Abgas wieder aus dem Schalldämpfer 1 ausströmt. Je nach Strömungspfad ist auch eine Durchströmung beider Katalysatoren 8, 9 möglich, was insbesondere zu einer verbesserten Abgasnachbehandlung führt.

Die Figur 2 zeigt eine weitere schematische Ansicht eines Schalldämpfers 20 mit einem Gehäuse 21, welches durch Trennwände 22, 23 in drei Teilvolumen 24, 25 und 26 unterteilt ist.

In das Gehäuse 21 des Schalldämpfers 20 führt eine Einströmstrecke 27 hinein und eine Ausströmstrecke 28 führt aus dem Gehäuse 21 des Schalldämpfers 20 hinaus. Die Strömungsstrecken 27, 28 weisen Öffnungen 29, 30 im Inneren des Gehäuses 21 auf, wobei die Öffnungen 29 ein Überströmen zwischen der Einströmstrecke 27 und dem ersten Teilvolumen 24 ermöglichen, während die Öffnungen 30 ein Überströmen zwischen der Ausströmstrecke 28 und dem dritten Teilvolumen 26 ermöglichen.

Im mittleren zweiten Teilvolumen 25 ist der Katalysator 31 ausgebildet, welcher in einem als Zwischenrohr wirkenden Mantelrohr 32 angeordnet ist. Über das Zwischenrohr 32 sind die Einströmstrecke 27 und die Ausströmstrecke 28 fluidisch miteinander verbunden.

Der Katalysator 31 ist analog zu den beiden Katalysatoren der Figur 1 aufgebaut und weist ebenfalls eine metallische Wabenstruktur auf, die eine Mehrzahl von axial durchströmbaren Strömungskanälen aufweist, wobei die Wandungen der Strömungskanäle Öffnungen aufweisen, die ein radiales Überströmen zwischen den Strömungskanälen ermöglichen. Darüber hinaus weist auch das Mantelrohr 32 Öffnungen auf, die ein Überströmen zwischen dem Inneren des Katalysators 31 und dem zweiten Teilvolumen 25 ermöglichen.

Durch das Überströmen des Abgases zwischen den Strömungsstrecken 27, 28 und dem Inneren des Katalysators 31 und den Teilvolumen 24, 25 und 26 kann insbesondere eine Reduzierung des Schallpegels erreicht werden. Die Teilvolumen können, wie bereits in Figur 1 beschrieben, Absorptionsmittel aufweisen oder Reflexionselemente, die der Reduzierung des Schallpegels dienen.

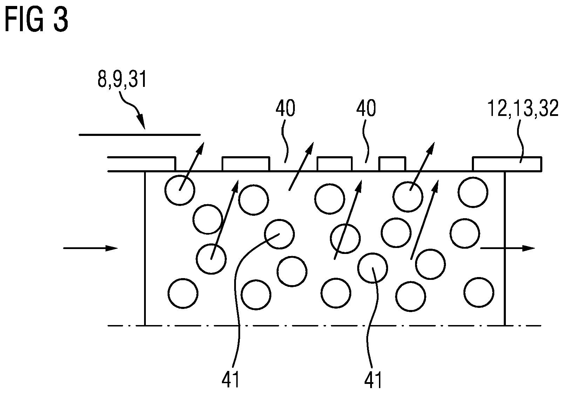

Die Figur 3 zeigt eine Detailansicht der drei Katalysatoren 8, 9 und 31 aus den Figuren 1 und 2. Der in Figur 3 gezeigte Ausschnitt ist in den Figuren 1 und 2 mit dem Bezugszeichen A gekennzeichnet.

Es ist im Detail dargestellt, wie die jeweiligen Mantelrohre 12, 13 und 32 Öffnungen 40 aufweisen, durch welche das durch den Wabenkörper strömende Abgas aus dem Katalysator 8, 9 und 31 herausströmen kann und in das Innere des Schalldämpfers 1, 20 überströmen kann. Weiterhin sind die Öffnungen 41 gezeigt, welche ein radiales Überströmen zwischen den Strömungskanälen des Wabenkörpers ermöglichen. Auf diese Weise ist einerseits eine Homogenisierung des durch die Katalysatoren 8, 9 und 31 strömenden Abgases zu erreichen, außerdem kann durch eine Umlenkung des strömenden Abgases in das Innere des Schalldämpfers 1, 20 eine weitere Reduktion des Schallpegels erreicht werden. Je nach Strömungsrichtung kann das Abgas auch über die Öffnungen 40 aus dem Schalldämpfer in den Katalysator 8, 9 und 31 überströmen.

Der Aufbau der einzelnen in den Figuren 1 bis 3 gezeigten Elemente ist schematisch und lediglich beispielhaft. Insbesondere die Art, Größe und Anzahl der Öffnungen, die Durchmesser und Querschnitte der Strömungsstrecken und der Katalysatoren ist beispielhaft und weist keinen beschränkenden Charakter auf. Die Darstellungen dienen der Verdeutlichung des Erfindungsgedankens.

Die unterschiedlichen Merkmale der einzelnen Ausführungsbeispiele können auch untereinander kombiniert werden.

## Patentansprüche

1. Vorrichtung zur Nachbehandlung von Abgasen eines Verbrennungsmotors mit zumindest einem vom Abgas durchströmbaren Katalysator (8,9 31) und mit zumindest einem durch ein geschlossenes Volumen gebildeten vom Abgas entlang einer Einströmstrecke (3, 27) hin zu einer Ausströmstrecke (4, 28) durchströmbaren Schalldämpfer (1, 20), wobei der Katalysator (8, 9, 31) durch einen Wabenkörper gebildet ist, der eine Mehrzahl von mit Abgas durchströmbaren Strömungskanälen aufweist, wobei der Wabenkörper in ein den Wabenkörper umschließendes Mantelrohr (12, 13, 32) aufgenommen ist und mit diesem stoffschlüssig verbunden ist, wobei der Katalysator (8, 9, 31) im Inneren des Schalldämpfers (1, 20) angeordnet ist, **dadurch gekennzeichnet, dass** das den Wabenkörper aufnehmende Mantelrohr (12, 13, 32) Öffnungen (40) aufweist, welche ein Überströmen aus dem Wabenkörper hin zum vom Schalldämpfer (1, 20) eingeschlossenen Volumen (6, 7, 24, 25, 26) ermöglichen.

2. Vorrichtung nach Anspruch 1, wobei der Katalysator (8, 9, 31) mit der Einströmstrecke (3, 27) und/oder der Ausströmstrecke (4, 28) fluidisch verbunden ist.

3. Vorrichtung nach einem der vorhergehenden Ansprüche, wobei der Querschnitt des Mantelrohrs (12, 13, 32) gleich groß ist, wie der durchströmbare Querschnitt der Einströmstrecke (3, 27) und/oder der Ausströmstrecke (4, 28).

4. Vorrichtung nach einem der vorhergehenden Ansprüche, wobei die Einströmstrecke (3, 27) und/oder die Ausströmstrecke (4, 28) durch eine Rohrleitung gebildet ist.

5. Vorrichtung nach einem der vorhergehenden Ansprüche, wobei die Einströmstrecke (3, 27) und/oder die Ausströmstrecke (4, 28) entlang ihrer innerhalb des Schalldämpfers (1, 20) angeordneten Erstreckung Öffnungen (14, 15, 29, 30) hin zum vom Schalldämpfer (1, 20) eingeschlossenen Volumen (6, 7, 24, 25, 26) aufweist.

6. Vorrichtung nach einem der vorhergehenden Ansprüche, wobei die die im Wabenkörper ausgebildeten Strömungskanäle bildenden Wandungen Öffnungen (41) aufweisen, die ein Überströmen zwischen den Strömungskanälen des Wabenkörpers in radialer Richtung des Wabenkörpers ermöglichen.

7. Vorrichtung nach einem der vorhergehenden Ansprüche, wobei der Mantel (32) des Katalysators (31) ein Zwischenrohr bildet, über welches die Einströmstrecke (27) mit der Ausströmstrecke (28) fluidisch verbunden ist.

8. Vorrichtung nach einem der vorhergehenden Ansprüche, wobei der Schalldämpfer (1) in zwei voneinander getrennte Teilvolumen (6, 7) unterteilt ist, wobei die Einströmstrecke (3) von außen durch das erste Teilvolumen (6) führt und in das zweite Teilvolumen (7) mündet, wobei die Ausströmstrecke (4) aus dem ersten Teilvolumen (6) durch das zweite Teilvolumen (7) führt und außerhalb des Schalldämpfers (1) mündet, wobei in der Einströmstrecke (3) und in der Ausströmstrecke (4) jeweils ein Katalysator (8, 9) innerhalb des ersten Teilvolumens (6) angeordnet ist.

9. Vorrichtung nach Anspruch 8, wobei die Einströmstrecke (3) Öffnungen (14) aufweist, über welche die Einströmstrecke (3) mit dem ersten Teilvolumen (6) in Fluidkommunikation steht.

10. Vorrichtung nach einem der vorhergehenden Ansprüche 8 oder 9, wobei die Ausströmstrecke (4) Öffnungen (15) aufweist, über welche die Ausströmstrecke (4) mit dem zweiten Teilvolumen (7) in Fluidkommunikation steht.

11. Vorrichtung nach einem der vorhergehenden Ansprüche, wobei der Schalldämpfer (1, 20) in mehrere Teilvolumen (6, 7, 24, 25, 26) untergliedert ist, wobei die einzelnen Teilvolumen (6, 7, 24, 25, 26) über eine aus einer Einströmstrecke (3, 27) und/oder einer Ausströmstrecke (4, 28) und/oder einem Zwischenrohr (32) gebildete Rohrleitung miteinander in Fluidkommunikation stehen.

## Claims

1. Device for the aftertreatment of exhaust gases of an internal combustion engine, having at least one catalytic converter (8, 9, 31), through which exhaust gas can flow, and at least one muffler (1, 20), which is formed by a closed volume and through which exhaust gas can flow along an inflow section (3, 27) to an outflow section (4, 28), wherein the catalytic converter (8, 9, 31) is formed by a honeycomb body which has a plurality of flow channels through which exhaust gas can flow, wherein the honeycomb body is accommodated in a casing tube (12, 13, 32), which surrounds the honeycomb body, and is connected to the casing tube in a materially bonded manner, wherein the catalytic converter (8, 9, 31) is arranged in the interior of the muffler (1, 20), **characterized in that** the casing tube (12, 13, 32) accommodating the honeycomb body has openings (40) which allow a transfer flow from the honeycomb body to the volume (6, 7, 24, 25, 26) enclosed by the muffler (1, 20) .

2. Device according to Claim 1, wherein the catalytic converter (8, 9, 31) is connected fluidically to the inflow section (3, 27) and/or to the outflow section (4, 28) .

3. Device according to either of the preceding claims, wherein the cross section of the casing tube (12, 13, 32) is the same size as the flow cross section of the inflow section (3, 27) and/or of the outflow section (4, 28).

4. Device according to any of the preceding claims, wherein the inflow section (3, 27) and/or the outflow section (4, 28) are/is formed by a pipe.

5. Device according to any of the preceding claims, wherein, along their/its extent arranged within the muffler (1, 20), the inflow section (3, 27) and/or the outflow section (4, 28) have/has openings (14, 15, 29, 30) to the volume (6, 7, 24, 25, 26) enclosed by the muffler (1, 20).

6. Device according to any of the preceding claims, wherein the walls that form the flow channels formed in the honeycomb body have openings (41) which allow a transfer flow between the flow channels of the honeycomb body in the radial direction of the honeycomb body.

7. Device according to any of the preceding claims, wherein the casing (32) of the catalytic converter (31) forms an intermediate tube, via which the inflow section (27) is connected fluidically to the outflow section (28) .

8. Device according to any of the preceding claims, wherein the muffler (1) is divided into two mutually separate partial volumes (6, 7), wherein the inflow section (3) leads from the outside through the first partial volume (6) and emerges into the second partial volume (7), wherein the outflow section (4) leads from the first partial volume (6) through the second partial volume (7) and emerges outside the muffler (1), wherein respective catalytic converters (8, 9) are arranged in the inflow section (3) and in the outflow section (4) within the first partial volume (6).

9. Device according to Claim 8, wherein the inflow section (3) has openings (14) via which the inflow section (3) is in fluid communication with the first partial volume (6).

10. Device according to either of preceding Claims 8 and 9, wherein the outflow section (4) has openings (15) via which the outflow section (4) is in fluid communication with the second partial volume (7).

11. Device according to any of the preceding claims, wherein the muffler (1, 20) is subdivided into a plurality of partial volumes (6, 7, 24, 25, 26), wherein the individual partial volumes (6, 7, 24, 25, 26) are in fluid communication with one another via a pipe formed by an inflow section (3, 27) and/or an outflow section (4, 28) and/or an intermediate tube (32).

## Revendications

1. Dispositif de post-traitement de gaz d'échappement d'un moteur à combustion interne comprenant au moins un catalyseur (8, 9, 31) pouvant être traversé par le gaz d'échappement et comprenant au moins un amortisseur de bruit (1, 20) formé par un volume fermé, pouvant être traversé par le gaz d'échappement le long d'une voie d'entrée (3, 27) jusqu'à une voie de sortie (4, 28), le catalyseur (8, 9, 31) étant formé par un corps alvéolaire, qui présente une pluralité de canaux d'écoulement pouvant être traversés par du gaz d'échappement, le corps alvéolaire étant reçu dans un tube d'enveloppe (12, 13, 32) entourant le corps alvéolaire et étant relié à celui-ci par accouplement de matière, le catalyseur (8, 9, 31) étant agencé à l'intérieur de l'amortisseur de bruit (1, 20), **caractérisé en ce que** le tube d'enveloppe (12, 13, 32) recevant le corps alvéolaire présente des ouvertures (40), qui permettent un débordement depuis le corps alvéolaire jusqu'au volume (6, 7, 24, 25, 26) inclus par l'amortisseur de bruit (1, 20).

2. Dispositif selon la revendication 1, dans lequel le catalyseur (8, 9, 31) est relié fluidiquement à la voie d'entrée (3, 27) et/ou à la voie de sortie (4, 28) .

3. Dispositif selon l'une quelconque des revendications précédentes, dans lequel la section transversale du tube d'enveloppe (12 13, 32) est égale à la section transversale pouvant être traversée de la voie d'entrée (3, 27) et/ou de la voie de sortie (4, 28) .

4. Dispositif selon l'une quelconque des revendications précédentes, dans lequel la voie d'entrée (3, 27) et/ou la voie de sortie (4, 28) est formée par une canalisation.

5. Dispositif selon l'une quelconque des revendications précédentes, dans lequel la voie d'entrée (3, 27) et/ou la voie de sortie (4, 28) présente le long de son extension agencée à l'intérieur de l'amortisseur de bruit (1, 20) des ouvertures (14, 15, 29, 30) vers le volume (6, 7, 24, 25, 26) inclus par l'amortisseur de bruit (1, 20).

6. Dispositif selon l'une quelconque des revendications précédentes, dans lequel les parois formant les canaux d'écoulement formés dans le corps alvéolaire présentent des ouvertures (41), qui permettent un débordement entre les canaux d'écoulement du corps alvéolaire dans la direction radiale du corps alvéolaire.

7. Dispositif selon l'une quelconque des revendications précédentes, dans lequel l'enveloppe (32) du catalyseur (31) forme un tube intermédiaire, par lequel la voie d'entrée (27) est reliée fluidiquement à la voie de sortie (28).

8. Dispositif selon l'une quelconque des revendications précédentes, dans lequel l'amortisseur de bruit (1) est divisé en deux volumes partiels (6, 7) séparés l'un de l'autre, la voie d'entrée (3) passant à travers le premier volume partiel (6) depuis l'extérieur et débouchant dans le deuxième volume partiel (7), la voie de sortie (4) passant à travers le deuxième volume partiel (7) à partir du premier volume partiel (6) et débouchant à l'extérieur de l'amortisseur de bruit (1), un catalyseur (8, 9) étant agencé respectivement dans la voie d'entrée (3) et dans la voie de sortie (4) à l'intérieur du premier volume partiel (6).

9. Dispositif selon la revendication 8, dans lequel la voie d'entrée (3) présente des ouvertures (14), par lesquelles la voie d'entrée (3) est en communication fluidique avec le premier volume partiel (6).

10. Dispositif selon l'une quelconque des revendications 8 ou 9 précédentes, dans lequel la voie de sortie (4) présente des ouvertures (15), par lesquelles la voie de sortie (4) est en communication fluidique avec le deuxième volume partiel (7).

11. Dispositif selon l'une quelconque des revendications précédentes, dans lequel l'amortisseur de bruit (1, 20) est subdivisé en plusieurs volumes partiels (6, 7, 24, 25, 26), les volumes partiels individuels (6, 7, 24, 25, 26) étant en communication fluidique les uns avec les autres par une canalisation formée d'une voie d'entrée (3, 27) et/ou d'une voie de sortie (4, 28) et/ou d'un tube intermédiaire (32).
